# NEW EUROPEAN PATENT SPECIFICATION

(11) **EP 1 674 528 B2**
(45) Date of publication and mention of the opposition decision: **01.10.2014**
(45) Mention of the grant of the patent: 30.03.2011
(21) Application number: 05258054.5
(22) Date of filing: 23.12.2005
(51) Int. Cl.: C08L 67/04

(54) **Aliphatic polyester composition and moulded article**
Aliphatische Polyesterzusammensetzung und Formkörper
Composition de polyester aliphatique et article moulé

(30) Priority: 27.12.2004 JP 2004376575; 05.07.2005 JP 2005196527
(43) Date of publication of application: 28.06.2006
(73) Proprietor: Teijin Limited, Osaka-shi, Osaka 541-0054 (JP); UNITIKA LTD., Amagasaki-shi Hyogo (JP)
(72) Inventor: Umemoto, Kazuhiko, c/o K.K. Toyota Chuo Kenk., Aichi-gun, Aichi-ken 480-1192 (JP); Okamoto, Hirotaka, c/o K.K. Toyota Chuo Kenk., Aichi-gun, Aichi-ken 480-1192 (JP); Nakano, Mitsuru, c/o K.K. Toyota Chuo Kenk., Aichi-gun, Aichi-ken 480-1192 (JP); Usuki,Arimitsu, c/o K.K. Toyota Chuo Kenk., Aichi-gun, Aichi-ken 480-1192 (JP); Miyake, Yuichi, c/o Toyota Jidosha K.K., Aichi-ken 471-8571 (JP); Matsuda, Masatoshi, c/o Toyota Jidosha K.K., Aichi-ken 471-8571 (JP)
(74) Representative: Duckworth, Timothy John

(56) References cited:
- EP-A1- 1 281 724
- EP-A1- 1 460 107
- JP-A- H0 925 400
- JP-A- H1 087 975
- JP-A- 200 017 164
- JP-A- 2003 253 106
- US-A1- 2004 054 051
- US-B1- 6 417 294
- US-B1- 6 488 938
- PATENT ABSTRACTS OF JAPAN vol. 1997, no. 05, 30 May 1997 (1997-05-30) & JP 09 025400 A (MITSUBISHI RAYON CO LTD), 28 January 1997 (1997-01-28)
- PATENT ABSTRACTS OF JAPAN vol. 2000, no. 04, 31 August 2000 (2000-08-31) & JP 2000 017164 A (SHIMADZU CORP), 18 January 2000 (2000-01-18)
- PATENT ABSTRACTS OF JAPAN vol. 2003, no. 08, 6 August 2003 (2003-08-06) & JP 2003 096285 A (TORAY IND INC), 3 April 2003 (2003-04-03)
- TSUJI ET AL.: 'Stereocomplex Formation between Enantiomeric Poly(lacticacid)s. 3. Calorimetric Studies on Blend Films Cast from Dilute Solution' MACROMOLECULES vol. 24, 1991, pages 5651 - 5656
- H. TSUJI ET AL.: 'Properties and morphologies of poly(L-lactide): 1. Annealing condition effects on properties and morphologies of poly(L-lactide)' POLYMER vol. 36, no. 14, 1995, pages 2709 - 2716
- H. TSUJI ET AL.: 'Crystallization from the melt of poly(lactide)s with different optical purities and their blends' MACROMOL. CHEM. PHYS. 1996, pages 3483 - 3499
- H. TSUJI ET AL.: 'Stereocomplex Formation between Enantiomeric Poly(lactic acid)s. 6. Binary Blends from Copolymers' MACROMOLECULES vol. 25, 1992, pages 5719 - 5723

## Description

### BACKGROUND OF THE INVENTION

### Field of the Invention

The present invention relates to aliphatic polyester compositions and molded articles obtained by molding the melted compositions.

### Related Background Art

Polylactic acid, which is one of typical aliphatic polyesters, is receiving attention as a medical material and a substitute for general-purpose resin since it shows a so-called biodegradability in which the substance is capable of being decomposed by the action of microorganisms and enzymes into lactic acid, carbon dioxide, and water which are harmless to humans. Such polylactic acid is a crystalline resin but has a low crystallization rate and actually shows the behavior close to a amorphous resin. Namely, the polylactic acid is sharply and excessively softened in the vicinity of a glass-transition temperature (an elastic modulus of below 1/100 in normal cases), causing difficulty in obtaining sufficient characteristics in terms of heat resistance, moldability, demoldability, and the like.

In order to solve such a problem, for example, Japanese Patent Application Laid-Open Gazette No. Hei. 11-302521 (Document 1) describes a polylactic acid composition, which consists of high crystalline polylactic acid (A) and low crystalline or amorphous polylactic acid (B) and has a so-called "rubbery plateau regeon" on a temperature dependence curve of storage modulus.

However, in both the high crystalline polylactic acid (A) and low crystalline or amorphous polylactic acid (B) used in Document 1, their weight-average molecular weights range from 50000 to 1000000, and an obtainable polylactic acid composition is still insufficient for improving the crystallization rate and also still insufficient from the viewpoint that there is a limitation in improving moldability while maintaining the level of thermal stability high.

Moreover, Japanese Patent Application Laid-Open Gazette No. 2003-96285 (Document 2) describes a polylactic acid resin composition formed by melting and mixing poly-L-lactic acid and poly-D-lactic acid wherein a relationship between the weight-average molecular weight Mw (A) of poly-L-lactic acid and the weight-average molecular weight Mw (B) of poly-D-lactic acid satisfies a condition of |Mw (A) - Mw (B)| ≧ 50000.

However, in the poly-L-lactic acid and poly-D-lactic acid used in the Document 2, the weight-average molecular weight ranges from 40000 to 390000, and an obtainable polylactic acid resin composition is still insufficient for improving the crystallization rate and also still insufficient from the viewpoint that there is a limitation in improving moldability while maintaining the level of thermal stability high.

JP 09 025400 provides a polylactic acid resin composition, used for moulded articles, that is prepared by blending a poly-L-lactic acid and a poly-D-lactic acid, each in a molten state. The weight-average molecular weight of each lactic acid falls within the range of from 5.000 to 500.000.

JP 2000 017164 provides pellets of a highly crystalline polylactic acid, that are obtained by blending a poly-L-lactic acid and a poly-D-lactic acid, each in a molten state. Both acids have a similar weight-average molecular weight.

### SUMMARY OF THE INVENTION

In view of the aforementioned circumstances, an object of the present invention is to provide an aliphatic polyester composition that dramatically improves a crystallization rate while maintaining the level of thermal stability such as heat resistance high to make it possible to achieve high levels of boLh characteristics of high thermal stability and excellent moldability, which are generally contrary to each other, in a well-balanced manner, and provide a molded article obtained by melt molding and crystallizing the composition.

As a result of assiduous research intended to attain the aforementioned object, the present inventors came to perfect the present invention by discovering Lhe following surprising fact, which was contrary to the common general technical knowledge to those skilled in the art. Namely, those skilled in the art do not conventionally recognize that an extremely low-molecular-weight aliphatic polyester should be mixed with a high-molecular-weight aliphatic polyester since the melting point of the obtainable aliphatic polyester composition is thought to reduce. However, when the extremely low-molecular-weight aliphatic polyester is mixed with the high-molecular-weight aliphatic polyester aliphatic polyester, surprisingly, the crystallization rate is dramatically improved in a state that the level of thermal stability of the obtained aliphatic polyester composition is maintained high.

An aliphatic polyester composition of the present invention contains a low-molecular-weight aliphatic polyester having weight-average molecular weight of 5000 to 35000, a high-molecular-weight aliphatic polyester having weight-average molecular weight of 120000 to 1000000, and one or more cristallization accelerators.

Further, a molded article of the present invention is obtained by melt molding and crystallizing an aliphatic polyester composition containing a low-molecular-weight aliphatic polyester having weight-average molecular weight of 5000 to 35000, a high-molecular-weight aliphatic polyester having weight-average molecular weight of 120000 to 1000000, and one or more crystallization accelerators.

Additionally, the weight-average molecular weight mentioned here is a value of weight-average molecular weight measured based on a standard polystyrene conversion by a gel permeation chromatography (GPC) method using chloroform as a solvent.

In the present invention, a compounding ratio (weight ratio) of the low-molecular-weight aliphatic polyester to the high-molecular-weight aliphatic polyester is preferably 10:90 to 90:10.

In the present invention, the aliphatic polyester composition preferably satisfy the following condition (i) or (ii) :
(i) The low-molecular-weight aliphatic polyester is a low-molecular-weight poly-D-lactic acid and the high-molecular-weight aliphatic polyester is a high-molecular-weight poly-L-lactic acid.
(ii) The low-molecular-weight aliphatic polyester is a low-molecular-weight poly-L-lactic acid and the high-molecular-weight aliphatic polyester is a high-molecular-weight poly-D-lactic acid.

Further, in the present invention, the aliphatic polyester composition preferably further contains one or more elastomer.

Additionally, in convention, the following recognition was the common general technical knowledge to those skilled in the art. Namely, the low-molecular-weight aliphatic polyester having weight-average molecular weight of 35000 or less should not be mixed since the melting point of the obtainable aliphatic polyester composition is reduced. However, when the low-molecular-weight aliphatic polyester having weight-average molecular weight of 5000 to 35000 is mixed with the high-molecular-weight aliphatic polyester having weight-average molecular weight of 120000 to 1000000, surprisingly, the obtainable aliphatic polyester composition dramatically improves the crystallization rate in a state where the level of thermal stability is maintained high, instead of exhibiting an intermediate characteristics of the two components. Although, in the present invention, it is not exactly certain why the crystallization rate is dramatically improved in a state where the level of thermal stability is maintained high, the present inventors consider the reason as follows. Namely, in the aliphatic polyester composition of the present invention, the low-molecular-weight aliphatic polyester component serves as a plasticizer to improve molecular mobility of the entire composition, thereby achieving a crystallization rate, which is equal to or higher than that of the case in which only the low-molecular-weight aliphatic polyester is used. Then, at the same time, in the aliphatic polyester composition of the present invention, a crystal lamella, having a thickness equal to that of the case in which only the high-molecular-weight aliphatic polyester is used, is formed by the presence of the high-molecular-weight aliphatic polyester component, so that the level of thermal stability of the obtainable aliphatic polyester composition is maintained high. The present inventors consider the reason as mentioned above.

According to the present invention, there is provided an aliphatic polyester composition that dramatically improves a crystallization rate while maintaining the level of thermal stability such as heat resistance high to make it possible to achieve high levels of both characteristics of high thermal stability and excellent moldability, which are generally contrary to each other, in a well-balanced manner. Then, the aliphatic polyester composition is melt molded and crystallized, thereby making it possible to obtain a molded article having excellent heat resistance and high crystallinity.

### DETAILED DESCRIPTION OF THE PREFERRED EMBODIMENTS

The following will specifically explain the present invention according to the preferred embodiments.

First, the aliphatic polyester composition of the present invention will be explained. The aliphatic polyester composition of the present invention contains a low-molecular-weight aliphatic polyester having weight-average molecular weight of 5000 to 35000, a high-molecular-weight aliphatic polyester having weight-average molecular weight of 120000 to 1000000 and one or more crystallization accelerators.

First of all, the aliphatic polyester of the present invention will be explained. The aliphatic polyester used in the present invention includes a polymer of aliphatic hydroxycarboxylic acids, a polymer of aliphatic polyhydric alcohol and aliphatic polyhydric carboxylic acid, a polymer of aliphatic hydroxycarboxylic acid, aliphatic polyhydric alcohol, and aliphatic polyhydric carboxylic acid, etc. More specifically, there are included aliphatic polyesters synthesized by the ring-opening polymerization such as polylactic acid, polyglycolic acid, poly (3-hydroxybutyric acid), poly (4-hydroxybutyric acid), poly (4-hydroxyvaleric acid), polycaprolactone and the like and aliphatic polyesters synthesized by the polycondensation reaction such as polyester carbonate, polyethylene succinate, polybutylene succinate, polyhexamethylene succinate, polyethylene adipate, polybutylene adipate, polyhexamethylene adipate, polyethylene oxalate, polybutylene oxalate, polyhexamethylene oxalate, polyethylene sebacate, polybutylene sebacate, and the like. Among these, poly (α-hydroxy acid) such as polylactic acid, polyglycolic acid and the like are preferable, and polylactic acid is particularly preferable.

The aliphatic polyester used in the present invention may be a homopolymer of the aforementioned aliphatic polyester but a copolymer of two or more different monomers can be used. The aforementioned aliphatic copolyester includes a copolymer of lactic acid and hydroxy acid excluding the lactic acid, poly(butylene succinate-co-butylene adipate) and the like. Additionally, the copolymer may be any of a random copolymer, an alternating copolymer, a block copolymer, and a graft copolymer.

The polylactic acid, which is particularly preferable as the aliphatic polyester of the present invention, is generally expressed by the following chemical formula:

Chemical formula: -[O-CH(CH₃)-C(O)]ₙ-

The aforementioned polylactic acid is preferable as the aliphatic polyester of the present invention since the crystallization rate is particularly improved by the present invention.

The polylactic acid synthesizing method according to the present invention is not particularly limited, and the direct polycondensation of D-lactic acid and/or L-lactic acid may be carried out and the ring-opening polymerization of D-lactide, L-lactide, meso-lactide, each of which is a cyclic dimer of lactic acids, may be carried out. The polylactic acid thus obtained may be formed by either a monomer unit derived from L-lactic acid or a monomer unit derived from D-lactic acid, or a copolymer of both units may be possible. Moreover, when the polylactic acid is a copolymer of the monomer unit derived from L-lactic acid and the monomer unit derived from D-lactic acid, the rate of content of one of the monomer unit derived from L-lactic acid and the monomer unit derived from D-lactic acid is preferably 85 mol% or more, 90 mol% or more is more favorable, 95 mol% or more is further more favorable, and 98 mol% or more is particularly favorable. When both the rate of contents of the monomer unit derived from L-lactic acid and that of the monomer unit derived from D-lactic acid are below 85 mol% crystallization is inhibited by a decrease in stereoregularity to show a tendency that an effect obtainable from the present invention is apt to be lowered.

Furthermore, multiple polylactic acids, each having a different ratio between the monomer unit derived from L-lactic acid and the monomer unit derived from D-lactic acid, may be blended at an arbitrary percentage.

Still moreover, in the polylactic acid according to the present invention, the other polymerizable monomers such as glycolide, caprolactone, etc., may be further polymerized with the lactic acid or lactide to form a copolymer. Furthermore, a polymer, which is obtained by homopolymerization of other polymerizable monomer, may be blended with the polylactic acid. Additionally, the ratio of a polymer derived from the other polymerizable monomer to the total amount of polymer is preferably 50 mol% or less based on a monomer conversion.

In the aliphatic polyester composition of the present invention, there is need to contain both the low-molecular-weight aliphatic polyester having weight-average molecular weight of 5000 to 35000 (more preferably 6000 to 30000) and the high-molecular-weight aliphatic polyester having weight-average molecular weight of 120000 to 1000000 (more preferably 200000 to 800000) in the aforementioned aliphatic polyesters.

When the weight-average molecular weight of the low-molecular-weight aliphatic polyester to be used in the present invention is below the lower limit, the mechanical properties such as strength, elastic modulus, etc., of the molded article obtained using the obtainable aliphatic polyester composition becomes insufficient. On the other hand, when the weight-average molecular weight of the low-molecular-weight aliphatic polyester to be used in the present invention exceeds the upper limit, the crystallization rate of the obtainable aliphatic polyester composition cannot be sufficiently improved, so that moldability, which is necessary to obtain a molded article having sufficient crystallinity even at a relatively low mold temperature, cannot be satisfactorily obtained.

Furthermore, when the weight-average molecular weight of the high-molecular-weight aliphatic polyester to be used in the present invention is below the lower limit, thermal stability of the obtainable aliphatic polyester composition is reduced, so that a molded article having sufficiently excellent heat resistance cannot be obtained. On the other hand, when the weight-averagc molecular weight of the high-molecular-weight aliphatic polyester to be used in the present invention exceeds the upper limit, fluidity of the obtainable aliphatic polyester composition at melt molding deteriorates, so that it becomes hard to supply the polymer into mold. In addition, moldability which is necessary to obtain a molded article having sufficient crystallinity even at a relatively low temperature, cannot be satisfactorily obtained due to low molecular mobility.

Moreover, in the present invention, the compounding ratio (weight ratio) of the low-molecular-weight aliphatic polyester to the high-molecular-weight aliphatic polyester is preferably 10:90 to 90:10, and 30:70 to 70:30 is more preferable, and 40:60 to 60:40 is particularly preferable.

When the rate of content of the low-molecular-weight aliphatic polyester in the aliphatic polyester composition of the present invention is below the lower limit, the crystallization rate of the obtainable aliphatic polyester composition cannot be sufficiently improved, resulting in a tendency that moldability, which is necessary to obtain a molded article having sufficient crystallinity even at a relatively low temperature, cannot be satisfactorily obtained. On the other hand, when the rate of content of the low-molecular-weight aliphatic polyester exceeds the upper limit, thermal stability of the obtainable aliphatic polyester composition is reduced, resulting in a tendency that a molded article having sufficiently excellent heat resistance cannot be obtained.

In a case where the aliphatic polyester according to the present invention is polylactic acid, both of the low-molecular-weight aliphatic polyester and the high-molecular-weight aliphatic polyester may be poly-L-lactic acid, and, both of them may be poly-D-lactic acid. However, it is preferable that one of them is poly-L-lactic acid and another of them is poly-D-lactic acid, as mentioned below.

In the present invention, the aliphatic polyesters preferably satisfy the following condition (i) or (ii):
(i) The low-molecular-weight aliphatic polyester is a low-molecular-weight poly-D-lactic acid and the high-molecular-weight aliphatic polyester is a high-molecular-weight poly-L-lactic acid.
(ii) The low-molecular-weight aliphatic polyester is a low-molecular-weight poly-L-lactic acid and the high-molecular-weight aliphatic polyester is a high-molecular-weight poly-D-lactic acid. When poly-L-lactic acid and poly-D-lactic acid are used in combination with each other as mentioned above, stereocomplex crystals are formed, resulting in a tendency that both of heat resistance and moldability of the resultant aliphatic polyester composition are extremely improved.

Such poly-L-lactic acid is a polymer having a repeated unit expressed by the following general formula (1):

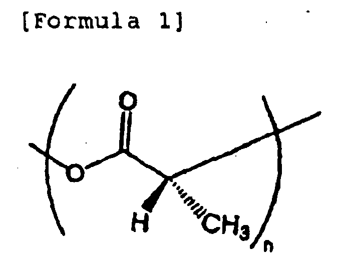

### [In the formula, n is an integer.]

On the other hand, such poly-D-lactic acid is a polymer having a repeated unit expressed by the following general formula (2):

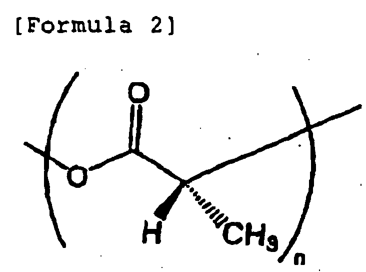

### [In the formula, n is an integer.]

Poly-L-lactic acid and poly-D-lactic acid are in the relation of enantiomer (mirror image) with each other.

The synthesis method of poly-L-lactic acid and poly-D-lactic acid according to the present invention is not particularly limited, and the direct polycondensation of L-lactic acid or D-lactic acid may be carried out and the ring-opening polymerization of L-lactide or D-lactide, each of which is a cyclic dimer of lactic acid, may be carried out.

Further, the rate of content of the monomer unit derived from L-lactic acid in the poly-L-lactic acid and the rate of content of the monomer unit derived from D-lactic acid in the poly-D-lactic acid are respectively preferably 85 mol% or more, 90 mol% or more is more favorable, 95 mol% or more is further more favorable, and 98 mol% or more is particularly favorable. When optical purity of the poly-L-lactic acid and the poly-D-lactic acid are below the lower limit mentioned above, heat resistance and moldability of the resultant aliphatic polyester composition do not tend to be sufficiently improved.

An explanation will be next given of a crystallization accelerator suitable for use in the present invention. In the aliphatic polyester composition of the present invention, the crystallization accelerator to be described in detail below is further contained in addition to the aforementioned low-molecular-weight aliphatic polyester and high-molecular-weight aliphatic polyester.

Such a crystallization accelerator is an additive that accelerates crystallization of the aliphatic polyester and corresponds to a plasticizer that increases molecular mobility of the aliphatic polyester and a crystal nucleating agent that accelerates crystal nucleation. In addition, the plasticizer and crystal nucleating agent may be either organic or inorganic matters, and any state of gas, liquid and solid may be possible.

Regarding such a crystal nucleating agent, at least one crystal nucleating agent is preferably selected from the group of a low molecular weight compound having an amide group, layered clay mineral organically modified by an organic onium salt, talc, a metal organate, a metal carboxylate, a metal phosphate, a metal phosphonate and a metal sulfonate. Addition of such a crystal nucleating agent improves the crystallization rate and allows crystallization by a molding method such as injection molding, resulting in a tendency that heat resistance of the obtainable molded article is further improved. Additionally, the effect by addition of such a crystal nucleating agent is not limited to the case of crystallization in a mold and is also useful in the case where annealing crystallization is carried out in a post-process.

The low molecular weight compound having an amide group suitable for the present invention includes an aliphatic carboxylamide such as an aliphatic monocarboxylamide, an N-substituted aliphatic monocarboxylamide, an aliphatic biscarboxylamide, an N-substituted aliphatic carboxyl bis-amide and an N-substituted urea group; an aromatic carboxylamide; and a hydroxyamide further having a hydroxyl group. The number of amide groups that these compounds have may be one, two or more. Additionally, the molecular weight of the low molecular weight compound having an amide group is preferably 1000 or less and more preferably 100 to 900. When the number average molecular weight of the low molecular weight compound exceeds 1000, compatibility with the aliphatic polyester is reduced to show a tendency that dispersibility is decreased and the compound is bleedout from the molded article.

In a case where poly-L-lactic acid and poly-D-lactic acid are used in combination with each other as mentioned above in order to form stereocomplex crystals, an aromatic amide compound described in Japanese Patent Application Laid-Open Gazette No. 2005-42084 is preferably used as a crystallization accelerator, and N,N',N"-tris(sec-butyl)trimesic amide is particularly preferably used.

Moreover, regarding the layered clay mineral organically modified by the organic onium salt suitable for the present invention, one that is obtained by organic modification of a general layered clay mineral such as montmorillonite using an organic onium salt such as organic ammonium salt can be favorably used. Furthermore, the above organically modified layered clay mineral is commercially sold by Nanocor, Southern Clay Products, CO-OP Chemical Co., Ltd, etc.

Still furthermore, although the talc suitable for the present invention is not limited in its composition, the smaller average particle size is favorable in order to disperse in the aliphatic polyester composition of the present invention as much as possible and about 30 µm or less is favorable. Additionally, surface processing may be applied to the above talc to improve the adhesive property to polymer. The above-mentioned talc is commercially sold by Nippon Talc Co., Ltd., Fuji Talc Industrial Co . , LLd., etc.

Moreover, in the aliphatic polyester composition of the present invention, any one of the following crystallization accelerators (i) to (iv) may be used.
(i) An oxamide derivative that is expressed by the following general formula (3): 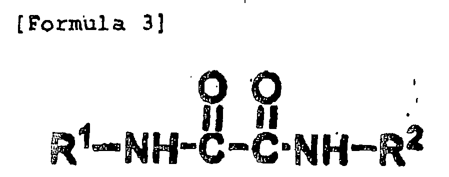 [In the formula (3), R¹ and R² denote alkyl groups with 1 to 20 carbon atoms, both of which may be the same as each other or different from each other and each of which may have a substituent.]
(ii) An isocyanuric acid derivative that is expressed by the following general formula (4): 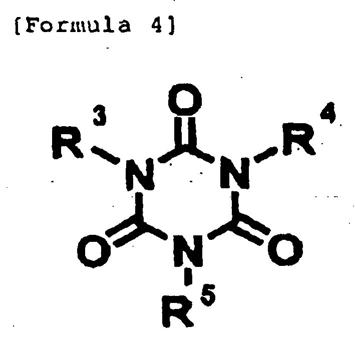 [In the formula (4), R³ to R⁵ denote alkyl groups with 1 to 20 carbon atoms, those of which may be the same as one another or different from one another and each of which may have a substituent.]
(iii) An aromatic urea compound that is expressed by the following general formula (5): 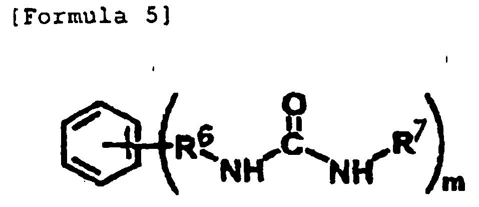 [In the formula (5), R⁶ denotes an alkylene group with 1 to 10 carbon atoms, R⁷ denotes an alkyl group with 1 to 25 carbon atoms, and m denotes an integer of 1 to 6.]
(iv) A dibasic acid bis(hydrazide benzoate) compound that is expressed by the following general formula (6): 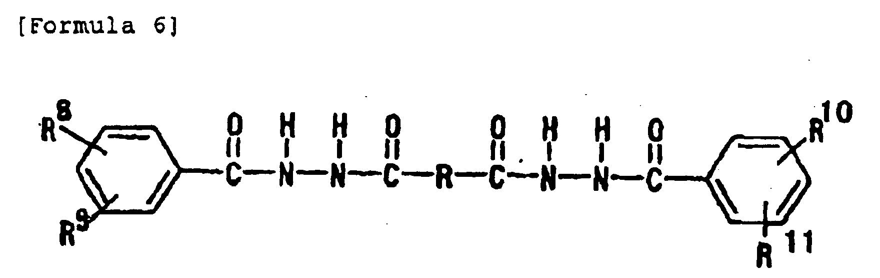 [In the formula (6), R denotes an alkylene group, an alkenylene group, a cycloalkylene group, an alkylene group having an ether bond, or an alkylene group interrupted by a cycloalkylene group, these groups having 1 to 12 carbon atoms, R⁸, R⁹, R¹⁰ and R¹¹ may be identical with or different from each other, and denote hydrogen atom, a halogen atom, an alkyl group, a cycloalkyl group, an aryl group, an arylalkyl group or an alkylaryl group, respectively, these groups having 1 to 12 carbon atoms. R⁸ and R⁹ and/or R¹⁰ and R¹¹ may bond with each other to form a five- to eight-membered ring.]

The content of crystallization accelerator in the aliphatic polyester composition of the present invention is not limited, and about 0.001 to 10 wt% is preferable. When the content of crystallization accelerator is below the lower limit, there is a tendency that the effect by addition of crystallization accelerator is not sufficiently obtained. While, when the content of crystallization accelerator exceeds the above upper limit, a plasticizer-like action due to the crystallization accelerator is excessively strongly expressed to show a tendency that rigidity of an obtainable molded article is likely to be reduced. The crystallization accelerators mentioned above may be used singly as a sole member or jointly as a mixture of two or more members.

In the present invention, it is preferable that the aliphatic polyester compositions of the present invention further contain an elastomer mentioned below in detail.

Such elastomers are not limited as far as they do not extremely impair crystallization of the aliphatic polyester compositions of the present invention. The elastomers suitable for the present invention include aliphatic polyester elastomers such as polybutylene succinate, polybutylene succinate adipate, polybutylene succinate carbonate, polyethylene succinate, and the like; polyolefin-based elastomers such as polyethylene, polypropylene, ethylene-propylene copolymer, ethylene-propylene-nonconjugated diene copolymer, ethylene-1-butene copolymer, and the like; acrylic-based elastomers such as various acrylic rubbers, ethylene-acrylic acid copolymer, ethylene-acrylic acid copolymer and its alkali metal salt (so called an ionomer), ethylene-glycidyl (meLh)acrylate copolymer, ethylene-alkylacrylate copolymer (for example, ethylene-ethyl acrylate copolymer, ethylene-butyl acrylate copolymer), and the like; various elastomers such as acid modified ethylene-propylene copolymer, diene rubber (for example, polybutadiene, polyisoprene, polychloroprene), a copolymer of diene and vinyl monomer (for example, styrene-butadiene random copolymer, styrene-butadiene block copolymer, styrene-butadiene-styrene block copolymer, styrene-isoprene random copolymer, styrene-isoprene block copolymer, styrene-isoprene-styrene block copolymer, a styrene grafted polybutadiene, butadiene-acrylonitrile copolymer), polyisobutylene, a copolymer of isobutylene and butadiene, a copolymer of isobutylene and isoprene, natural rubber, thiokol rubber, polysulfide rubber, acrylic rubber, silicone rubber, polyurethane rubber, polyether rubber, epichlorohydrin rubber, and the like.

Additionally, such elastomers preferably include a modified group such as an epoxy group, an unsaturated organic acid group, a glycidyl group, and the like in order to improve compatibility with poly-lactic acid and/or interfacial adhesion property. Further, such elastomers preferably include, as a part or as a whole, a polymer including an acrylic unit such as methyl methacrylate unit, methyl acrylate unit, ethyl acrylate unit, butyl acrylate unit, and the like.

Further, other examples of such elastomers may be those on the market. Such elastomers on the market include polyester-based elastomers such as Hytrel (trade name) manufactured by Du Pont-Toray Co.,Ltd., Pelprene (trade name) manufactured by Toyobo Co.,Ltd., Polyestar (trade name) manufactured by Nippon Synthetic Chemical Industry Co.,Ltd., Glyrux E (trade name) manufactured by Dainippon Ink and Chemicals, Inc., and the like; polyamide-based elastomers such as Glyrux A (trade name) manufactured by Dainippon Ink and Chemicals, Inc., and the like; multilayer-structure polymer type elastomers such as Metablen (trade name) manufactured by Mitsubishi Rayon Co.,Ltd., Kaneace (trade name) manufactured by Kaneka Co.,Ltd., Paraloid (trade name) manufactured by Kureha Corporation, Acryloid (trade name) manufactured by Rohm and Haas Company, Stafyloid (trade name) manufactured by Takeda Pharmaceutical Co., Ltd., PARAPET SA (trade name) manufactured by Kuraray Co.,Ltd., and the like. Such multilayer-structure polymer type elastomers have at least one rubber layer therein and have so called core-shell type structure which comprises an innermost layer (core layer) and one or more layers (shell layer (s)) covering the core layer, and, in which adjacent layers are formed by different polymers, respectively.

The content of elastomer in the aliphatic polyester composition of the present invention is not limited, and about 2 to 50 wt% is preferable and about 5 to 30 wt% is more preferable. When the content of elastomer is below the lower limit, there is a tendency that demoldability and mechanical property which would be increased by enhanced ductility are not sufficiently improved. While, when the content of elastomer exceeds the above upper limit, a plasticizer-like action due to the elastomer is excessively strongly expressed to show a tendency that rigidity of an obtainable molded article is likely to be reduced. The elastomers mentioned above may be used singly as a sole member or jointly as a mixture of two or more members.

Moreover, in the aliphatic polyester composition of the present invention, an additive such as filler, plasticizer, pigment, stabilizer, anti-static agent, a UV absorber, antioxidant, flame retardant, mold release agent, lubricant, dyes, antimicrobial agent, end capping agent, and so on may be further added. The content of the above additive is preferably 20 wt% or less in the aliphatic polyester composition of the present invention.

The molded article of the present invention is next explained. The molded article of the present invention is one that is obtained by melt molding the aforementioned aliphatic polyester composition of the present invention.

In manufacturing the molded article of the present invention, temperature at which the aliphatic polyester composition is melted is preferably in the range from about 160 to 250 °C. When the temperature is below the lower limit, the melting of aliphatic polyester composition becomes insufficient to show a tendency that fluidity decreases to reduce mold processability and to cause difficulty in uniform dispersion of various components. On the other hand, when the temperature exceeds the upper limit, there is a tendency that the molecular weight of aliphatic polyester is reduced to spoil the physical property of obtainable molded article.

Moreover, although holding time in the above-described melting temperature is not particularly limited, about 0.1 to 30 minutes are favorable. When the holding time is below the lower limit, sufficient fluidity cannot be obtained to show a tendency that mold processability is reduced and various components are less likely to be uniformly dispersed. On the other hand, when the holding time exceeds the upper limit, there is a tendency that the molecular weight of aliphatic polyester is reduced to spoil the physical property of obtainable molded article.

Moreover, regarding a method for crystallizing the melted aliphatic polyester composition, there is preferably used a method in which the aliphatic polyester composition is cooled down to temperature in the range of about 30 to 160 °C from the melted state and held for 10 seconds to 30 minutes at the temperature. When the holding time is below the lower limit, the obtainable molded article is apt to be insufficiently crystallized. On the other hand, when the holding time exceeds the upper limit, much time more than necessary is apt to be required to obtain the molded article.

In manufacturing the molded article of the present invention, the molding method is not particularly limited and any of injection molding, extrusion, blow molding, inflation molding, contour extrusion, injection blow molding, vacuum and pressure molding, spinning, etc. can be suitably used.

Further, the shape and thickness of the molded article of the present invention are not particularly limited, and any of injection molded product, extrusion molded product, compression molded product, blow molded product, sheet, film, thread, fabric and the like may be used. More specifically, there can be included auto parts such as bumper, radiator grille, side molding, garnish, wheel cover, aero part, instrument panel, door trim, seat fabric, door handle, floor mat, etc., a housing of a home electrical appliance, a product packaging film, a waterproof sheet, various kinds of containers, bottle, etc. Furthermore, for using the molded article of the present invention as a sheet, paper or other polymer sheet is laid on the molded article and the resultant may be used as a layered product of a multilayer structure.

### [Examples]

The following will more specifically explain the present invention based on examples and comparative examples, but the present invention is not limited to the following examples.

### (Example 1)

First, L-lactide (made by Aldrich, 10g), 1-dodecanol (made by Wako Pure Chemical Industries, Ltd. , 1.0g), and Tin 2-ethylhexanoate (made by Wako Pure Chemical Industries, Ltd., 0.008ml) were mixed and the mixture was reacted for one hour at 160 °C, thereafter being cooled down to room temperature. Next, a product was melted using chloroform and the resultant was reprecipitated using methanol/HCl (1%), filtered and washed, thereby obtaining white low-molecular-weight poly-L-lactic acids.

Next, high-molecular-weight poly-L-lactic acid of 0.5g (made by Toyota Jidosha Kabushiki Kaisha, #5000, weight-average molecular weight (Mw) = 215000), the above-obtained low-molecular-weight poly-L-lactic acid of 0.5g (weight-average molecular weight (Mw) = 6900) and ethylene-bis-12-hydroxystearamide of 0.01g (made by Kawaken Fine Chemicals Co.,Ltd., hereinafter referred to as "EBHSA") were mixed using chloroform of 10 ml while being stirred. The obtained mixture was dropped on a petri dish, and chloroform was removed therefrom by drying under normal pressure and reduced pressure, thereby preparing a film of a polylactic acid resin composition.

The obtained film was used as a sample and a melting temperature (Tm) of a crystal melting peak, a ratio (Tc/Tm) between a crystallization temperature (Tc) of a crystallizing peak and a melting temperature (Tm) as an absolute temperature unit (Kelvin), and a exothermal heat flow (ΔH) during crystallization were measured using a differential scanning calorimeter (DSC) under the following conditions. The obtained result is shown in Table 1.

The evaluation of crystallization behavior by DSC was specifically made by the following method. Namely, first, as a preliminary measurement, a part of the sample (5 to 10mg) was heated from 30°C up to 250°C at a heating rate of 5 °C/min and the melting temperature (T₁) was obtained. The temperature of (T₁+30) °C obtained in this manner is defined as (A) °C. Next, another part of the sample (5 to 10mg) was heated up to (A) °C, and melted after being held for five minutes. Then, the sample was cooled down to 30 °C at a cooling rate of 20 °C/min, at which time the crystallization temperature (Tc) of polylactic acid as a crystallization peak and the exothermal heat flow (ΔIIc) associated with crystallization were obtained. Next, after cooling, the sample was reheated up to (A) °C at a heating rate of 10 °C/min, at which time the melting temperature (Tm) of the crystal melting peak of polylactic acid was obtained.

Moreover, the weight-average molecular weight of polylactic acid was measured by gel permeation chromatography (made by Shoko Co., Ltd., apparatus name: Shodex GPC-101, column: K-805L, flow rate of 1.0 ml/min) method in chloroform as a solvent using polystyrene standard.

### (Examples 2 to 4)

Low-molecular-weight poly-L-lactic acid with weight-average molecular weight (Mw) of 9200 (Example 2), one with weight-average molecular weight (Mw) of 29600 (Example 3) and one with weight-average molecular weight (Mw) of 34200 (Example 4) were used. Excepting the use of these polylactic acids, a film of a polylactic acid resin composition was prepared and the above DSC measurement was made using the obtained film as the sample in the same manner as that of Example 1. The obtained results are shown in Table 1.

### (Example 5)

Excepting the use of high-molecular-weight poly-L-lactic acid with weight-average molecular weight (Mw) of 451000, a film of a polylactic acid resin composition was prepared and the above DSC measurement was made using the obtained film as the sample in the same manner as that of Example 1. The obtained result is shown in Table 1.

### (Example 6)

Excepting the use of high-molecular-weight poly-L-lactic acid with weight-average molecular weight (Mw) of 451000, a film of a polylactic acid resin composition was prepared and the above DSC measurement was made using the obtained film as the sample in Lhe same manner as that of Example 2. The obtained result is shown in Tables 1 and 2.

### (Examples 7 to 9)

The compounding ratio (weight ratio) of the low-molecular-weight poly-L-lactic acid to the high-molecular-weight poly-L-lactic acid was 2:8 (Example 7), the compounding ratio was 4:6 (Example 8) and the compounding ratio was 8:2 (Example 9). Excepting these ratios, a film of a polylactic acid resin composition was prepared and the above DSC measurement was made using the obtained film as the sample in the same manner as that of Example 6. The obtained results are shown in Table 2.

### (Example 10)

First, D-lactide (made by Purac Limited, 10g) 1-dodecanol (made by Wako Pure Chemical Industries, Ltd., 1.0g), and Tin 2-ethylhexanoate (made by Wako Pure Chemical Industries, Ltd., 0.008ml) were mixed and the mixture was reacted for one hour at 160 °C, thereafter being cooled down to room temperature. Next, a product was melted using chloroform and the resultant was reprecipitated using methanol/HCl (1%), filtered and washed, thereby obtaining white low-molecular-weight poly-D-lactic acids.

Next, high-molecular-weight poly-L-lactic acid of 0.5g (made by Toyota Jidosha Kabushiki Kaisha, #5000, weight-average molecular weight (Mw) = 215000), the above-obtained low-molecular-weight poly-D-lactic acid of 0.5g (weight-average molecular weight (Mw) = 6800) and N,N',N''-tris(sec-butyl)trimesic amide of 0.01g were mixed using a mixed solution of chloroform of 9ml and hcxafluoroisopropanol of 1ml while being stirred. The obtained mixture was dropped on a petri dish, and solvent was removed therefrom by drying under normal pressure and reduced pressure, thereby preparing a film of a polylactic acid resin composition.

The obtained film was used as a sample, and the measurements using a differential scanning calorimeter (DSC) were carried out as mentioned above. The obtained result is shown in Table 3.

### (Example 11 to 14)

Low-molecular-weight poly-D-lactic acid with weight-average molecular weight (Mw) of 9400 (Example 11), one with weight-average molecular weight (Mw) of 16600 (Example 12), one with weight-average molecular weight (Mw) of 19000 (Example 13) and one with weight-average molecular weight (Mw) of 28800 (Example 14) were used. Excepting the use of these polylactic acids, a film of a polylactic acid resin composition was prepared and the above DSC measurement was made using the obtained film as the sample in the same manner as that of Example 10. The obtained results are shown in Table 3.

### (Comparative Examples 1 to 3)

Low-molecular-weight poly-L-lactic acid with weight-average molecular weight (Mw) of 4600 (Comparative Example 1), one with weight-averagc molecular weight (Mw) of 41500 (Comparative Example 2) or one with weight-average molecular weight (Mw) of 118000 (Comparative Example 3) were used. Excepting the use of these polylactic acids, a film of a polylactic acid resin composition was prepared and the above DSC measurement was made using the obtained film as the sample in the same manner as that of Example 1. The obtained results are shown in Table 1.

### (Comparative Example 4)

Excepting the use of high-molecular-weight poly-L-lactic acid with weight-average molecular weight (Mw) of 110000, a film of a polylactic acid resin composition was prepared and the above DSC measurement was made using the obtained film as the sample in the same manner as that of Example 2. The obtained result is shown in Table 1.

### (Comparative Examples 5 to 6)

Excepting the use of only the high-molecular-weight poly-L-lactic acid with weight-average molecular weight (Mw) of 215000 (Comparative Example 5) or one with weight-average molecular weight (Mw) of 451000 (Comparative Example 6) without using the low-molecular-weight poly-L-lactic acid, a film of a polylactic acid resin composition was prepared and the above DSC measurement was made using the obtained film as the sample in the same manner as that of Example 1. The obtained results are shown in Table 1 (the result of Comparative Example 6 is shown in Tables 1 and 2) .

### (Comparative Examples 7 to 8)

Excepting the use of only the low-molecular-weight poly-L-lactic acid with weight-average molecular weight (Mw) of 6900 (Comparative Example 7) or one with weight-average molecular weight (Mw) of 9200 (Comparative Example 8) without using the high-molecular-weight poly-L-lactic acid, a film of a polylactic acid resin composition was prepared and the above DSC measurement was made using the obtained film as the sample in the same manner as that of Example 1. The obtained results are shown in Table 1 (the result of Comparative Example 8 is shown in Tables 1 and 2) .

### (Comparative Example 9)

Excepting the use of low-molecular-weight poly-D-lactic acid with weight-average molecular weight (Mw) of 99500, a film of a polylactic acid resin composition was prepared and the above DSC measurement was made using the obtained film as the sample in the same manner as that of Example 10. The obtained result is shown in Table 3.

**[Table 1]**

| | PLA | Evaluation | | | | |
|---|---|---|---|---|---|---|
| | Mw (*1) | Tm (°C) | Tc (°C) | ΔH (J/g) | Tc/Tm (K/K) | Over-all evaluation |
| Example 1 | (L) 21.5×10⁴ + -(L)0.69×10⁴ | 165.7 | 112.6 | 43.6 | 0.879 | Good |
| Example 2 | (L)21.5×10⁴ + (L)0.92×10⁴ | 167.3 | 114.6 | 43.8 | 0.880 | Good |
| Example 3 | (L)21.5×10⁴+ (L)2.96×10⁴ | 167.4 | 115.2 | 40.2 | 0.882 | Good |
| Example 4 | (L)21.5×10⁴ + (L)3.42×10⁴ | 167.9 | 115.6 | 40.1 | 0.881 | Good |
| Example 5 | (L)45.1×10⁴ + (L)0.69×10⁴ | 172.6 | 116.6 | 48.4 | 0.874 | Good |
| Example 6 | (L)45.1×10⁴ + (L)0.92×10⁴ | 172.6 | 119.9 | 48.4 | 0.882 | Good |
| Comparative Example 1 | (L)21.5×10⁴ + (L)0.46×10⁴ | 162.3 | 109.3 | 43.3 | 0.878 | N.G. |
| Comparative Example 2 | (L)21.5×10⁴ + (L)4.15×10⁴ | 172.7 | 112.6 | 38.3 | 0.865 | N.G. |
| Comparative Example 3 | (L)21.5×10⁴ + (L)11.8×10⁴ | 174.7 | 110.6 | 34.4 | 0.857 | N.G. |
| Comparative Example 4 | (L)11.0×10⁴+ (L)0.92×10⁴ | 166.3 | 100.6 | 42.0 | 0.850 | N.G. |
| Comparative Example 5 | (L)21.5×10⁴ | 171.0 | 105.3 | 27.8 | 0.852 | N.G. |
| Comparative Example 6 | (L)45.1×10⁴ | 177.3 | 109.3 | 30.0 | 0.849 | N.G. |
| Comparative Example 7 | (L)0.69×10⁴ | 148.0 | 88.6 | 39.9 | 0.859 | N.G. |
| Comparative Example 8 | (L)0.92×10⁴ | 155.7 | 94.6 | 41.3 | 0.858 | N.G. |

| | | | | | | |
|---|---|---|---|---|---|---|
| (*1) : L denotes poly-L-lactic acid. D denotes poly-D-lactic acid. | | | | | | |

**[Table 2]**

| | PLA | | Evaluation | | | | |
|---|---|---|---|---|---|---|---|
| | Mw(*1) | | Tm (°C) | Tc (°C) | ΔH (J/g) | Tc/Tm (K/K) | Over-all evaluation |
| | (L)0.92×10⁴ | (L)45.1×10⁴ | | | | | |
| Example 6 | 5 | 5 | 172.6 | 119.9 | 48.4 | 0.882 | Good |
| Example 7 | 2 | 8 | 176.3 | 113.3 | 40.1 | 0.860 | Good |
| Example 8 | 4 | 6 | 174.4 | 115.9 | 44.2 | 0.869 | Good |
| Example 9 | 8 | 2 | 166.1 | 108.4 | 41.8 | 0.869 | Good |
| Comparative Example 6 | 0 | 10 | 177.3 | 109.3 | 30.0 | 0.849 | N.G. |
| Comparative Example 8 | 10 | 0 | 155.7 | 94.6 | 41.3 | 0.858 | N.G. |

| | | | | | | | |
|---|---|---|---|---|---|---|---|
| (*1) : L denotes poly-L-lactic acid. D denotes poly-D-lactic acid. | | | | | | | |

**[Table 3]**

| | PLA | Evaluation | | | | |
|---|---|---|---|---|---|---|
| | Mw(*1) | Tm (°C) | Tc (°C) | ΔH (J/g) | Tc/Tm (K/K) | Over-all evaluation |
| Example 10 | (L)21.5×10⁴ + (D)0.68×10⁴ | 208.4 | 144.9 | 56.2 | 0.868 | Good |
| Example 11 | (1)21.5×10⁴ + (D)0.94×10⁴ | 210.7 | 146.9 | 55.6 | 0.868 | Good |
| Example 12 | (L)21.5×10⁴ + (D)1.66×10⁴ | 214.0 | 148.3 | 56.4 | 0.865 | Good |
| Example 13 | (L)21.5×10⁴+ (D)1.90×10⁴ | 217.4 | 147.6 | 57.4 | 0.858 | Good |
| Example 14 | (L)21.5×10⁴ + (D)2.88×10⁴ | 216.4 | 146.3 | 53.7 | 0.857 | Good |
| Comparative Example 9 | (L)21.5×10⁴ + (D)9.95×10⁴ | 207.7 | 139.6 | 32.5 | 0.858 | N.G. |

| | | | | | | |
|---|---|---|---|---|---|---|
| (*1) : L denotes poly-L-lactic acid. D denotes poly-D-lactic acid. | | | | | | |

In Tables 1, 2 and 3, the melting temperature (Tm) of crystal melting peak is an index of thermal stability and is favorably 165 °C or more in view of heat resistance. Moreover, the ratio (Tc/Tm) between a crystallization temperature (Tc) and the melting temperature (Tm) based on an absolute temperature is an index of crystallization rate and is favorably 0.855 (K/K) or more in view of moldability. Still moreover, the exothermal heat flow (ΔH) associated with crystallization is an index of a degree of crystallinity to be achieved and is preferably 40 J/g or more in view of moldability. Then, in Tables 1, 2 and 3, the case in which all of Tm, (Tc/Tm) and ΔH satisfy the aforementioned conditions is indicated by the over-all estimation "Good" and the case in which even any one of these does noL satisfy the aforementioned conditions is indicated by the over-all estimation "N.G.".

As is clear from the results shown in Tables 1, 2 and 3, it can be confirmed that the use of the polylactic acid resin composition of the present invention (Examples 1 to 14) dramatically improves the crystallization rate in a state where the level of thermal stability is maintained high to make it possible to achieve high levels of both characteristics of high thermal stability and excellent moldability, which are generally contrary to each other, in a well-balanced manner, instead of an intermediate performance between that of the singly used low-molecular-weight polylactic acid and that of the singly used high-molecular-weight polylactic acid.

As is clear from the results shown in Table 3, it can be confirmed that the use of the polylactic acid resin composition in which poly-L-lactic acid and poly-D-lactic acid were used in combinati on in order to form stereocomplex crystals according to the present invention (Examples 10 to 14) improves further both thermal stability and moldability.

### (Example 15)

The evaluations of the moldability by the injection molding and the heat deflection temperature (deflection temperature under load) were made in the following way.

Namely, first, 50 parts by weight of low-molecular-weight poly-L-lactic acid (weight-average molecular weight (Mw) = 7500), 50 parts by weight of high-molecular-weight poly-L-lactic acid (weight-average molecular weight (Mw) = 215000), 1 part by weight of EBHSA, and 1 part by weight of talc were melt mixed to prepare pellets of the polylactic acid resin composition using a twin screw extruder (made by TECHNOVEL Co., Ltd., KZW15TW-60MG).

Next, using a small-size injection molding machine (made by Nissei Plastic Industrial Co., Ltd.: PS90E2ASE), a bending specimen (90 mm × 10 mm × 4 mm) was injection molded (n=3) under conditions of mold temperature and holding time shown in Table 4, aL which time the deformation state of specimen was evaluated based on the following criteria:
Good: Undeformed
N.G.: Deformed
The obtained result is shown in Table 4.

Furthermore, using the above-mentioned small-size injection molding machine, the above-mentioned bending specimen was injection molded under conditions of mold temperature of 80 °C and holding time of 120 seconds, a deflection temperature under load (HDT) of the obtained specimen was measured according to the method described in JIS K 7191. Additionally, a load was adopted to 0.45 MPa (lower load) in a flatwise method and an average of measured values of five specimens was calculated. The obtained result is shown in Table 4.

### (Example 16)

Excepting the use of low-molecular-weight poly-L-lactic acid with weight-average molecular weight (Mw) of 29600, a specimen of the polylactic acid resin composition was prepared and the evaluations of the moldability by the injection molding and the heat deflection temperature were made in the same manner as that of Example 15. The obtained result is shown in Table 4.

### (Example 17)

First, 45 parts by weight of low-molecular-weight poly-D-lactic acid (weight-average molecular weight (Mw) = 13300), 45 parts by weight of high-molecular-weight poly-L-lactic acid (weight-average molecular weight (Mw) = 215000), 10 parts by weight of polyester-based thermoplastic elastomer (Hytrel 3046 made by Du Pont-Toray Co.,Ltd., injection grade), 1 part by weight of N,N',N''-tris (sec-butyl) trimesic amide, and 1 part by weight of talc were melt mixed to prepare pellets of the polylactic acid resin composition using a twin screw extruder (made by TECHNOVEL Co., Ltd., KZW15TW-60MG).

Next, using the pellet obtained in this way, a specimen was prepared and the evaluations of the moldability by the injection molding and the heat deflection temperature were made in the same manner as that of Example 15. The obtained result is shown in Table 4. In this Example, the specimen was molded under conditions of mold temperature of 70 °C and holding time of 10 seconds, and a heat deflection temperature (HDT) of the obtained specimen was measured.

### (Comparative Example 10)

Excepting the use of 100 parts by weight of the high-molecular-weight poly-L-lactic acid (weight-average molecular weight (Mw) = 215000) without using the low-molecular-weight poly-L-lactic acid, a specimen of the polylactic acid resin composition was prepared and the evaluations of the moldability by the injection molding and the heat deflection temperature were made in the same manner as that of Example 15. The obtained result is shown in Table 4.

### (Comparative Example 11)

Excepting the use of 100 parts by weight of the low-molecular-weight poly-L-lactic acid (weight-average molecular weight (Mw) = 7500) without using the high-molecular weight poly-L-lactic acid, each specimen of the polylactic acid resin composition was tried to prepare and the evaluations of the moldability by the injection molding and the heat deflection temperature were tried in the same manner as that of Example 15, but the molded article was not able to be demolded without being broken and the heat deflection temperature was not able to be evaluated either.

| | Injection moldability | | | | | HDT (°C) |
|---|---|---|---|---|---|---|
| | 70°C, 10S | 70°C, 120S | 80°C, 120S | 90°C, 30S | 100°C, 30S | |
| Example 15 | N.G. | Good | Good | Good | Good | 100.0 |
| Example 16 | N.G. | Good | Good | N.G. | Good | 110.1 |
| Example 17 | Good | Good | Good | Good | Good | 137.0 |
| Comparative Example 10 | N.G. | N.G. | Good | N.G. | N.G. | 83.7 |
| Comparative Example 11 | No molding was achieved | | | | | |

As is clear from the results shown in Table 4, it can be confirmed that the use of the polylactic acid resin composition of the present invention (Examples 15 to 17) was excellent both the moldability and the deflection temperature under load, and the use of the polylactic acid resin composition in which poly-L-lactic acid and poly-D-lactic acid were used in combination in order to form stereocomplex crystals (Example 17) improves further the moldability. On the other hand, the use of only the high-molecular-weight poly-L-lactic acid (Comparative Example 10) was inferior both the moldability and the deflection temperature under load. Moreover, the use of only the low-molecular-weight poly-L-lactic acid (Comparative Example 11) caused difficulty in demolding the molded article without being broken and was not able to evaluate the deflection temperature under load.

### [Industrial Applicability]

As explained above, according to the present invention, there is provided an aliphatic polyester composition that dramatically improves a crystallization rate while maintaining the level of thermal stability such as heat resistance high to make it possible to achieve high levels of both characteristics of high thermal stability and excellent moldability, which are generally contrary to each other, in a well-balanced manner. Then, the aliphatic polyester composition is melt molded and crystallized, thereby making it possible to obtain a molded article having excellent heat resistance and high crystallinity.

Therefore, the molded article obtained by the aliphatic polyester composition of the present invention is useful for auto parts such as bumper, radiator grille, side molding, garnish, wheel cover, aero part, instrument panel, door trim, seat fabric, door handle, floor mat, etc., a housing of a home electrical appliance, a product packaging film, a waterproof sheet, various kinds of containers, bottle, etc. Furthermore, for using the molded article of the present invention as a sheet, paper or other polymer sheet is laid on the molded article and the resultant may be used as a layered product with a multilayer structure.

## Claims

1. An aliphatic polyester composition comprising (a) an aliphatic polyester having a weight-average molecular weight of 5000 to 35000; (b) an aliphatic polyester having weight-average molecular weight of 120000 to 1000000; and one or more crystallization accelerators.

2. A composition according to claim 1, wherein a compounding ratio of polyester (a) to polyester (b) is from 10:90 to 90:10 by weight.

3. A composition according to claim 1 or 2, wherein polyester (a) comprises a poly-D-lactic acid and polyester (b) comprises a poly-L-lactic acid.

4. A composition according to claim 1 or 2, wherein polyester (a) comprises a poly-L-lactic acid and polyester (b) comprises a poly-D-lactic acid.

5. A composition according to any preceding claim, further comprising one or more elastomers.

6. A molded article obtainable by melt molding and crystallizing a composition according to any preceding claim.

## Patentansprüche

1. Aliphatische Polyesterzusammensetzung, umfassend (a) einen aliphatischen Polyester mit einem Gewicht-gemittelten Molekulargewicht von 5000 bis 35000, (b) einen aliphatischen Polyester mit einem Gewicht-gemittelten Molekulargewicht von 120000 bis 1000000 und einen oder mehrere Kristallisationsbeschleuniger.

2. Zusammensetzung nach Anspruch 1, wobei ein Mischungsverhätnis von Polyester (a) zu Polyester (b) von 10:90 bis 90: 10 nach Gewicht beträgt.

3. Zusammensetzung nach Anspruch 1 oder 2, wobei Polyester (a) eine Poly-D-Milchsäure umfasst und Polyester (b) eine Poly-L-Milchsäure umfasst.

4. Zusammensetzung nach Anspruch 1 oder 2, wobei Polyester (a) eine Poly-L-Milchsäure umfasst und Polyester (b) eine Poly-D-Milchsäure umfasst.

5. Zusammensetzung nach einem der vorherigen Ansprüche, die ferner ein oder mehrere Elastomere umfasst.

6. Formkörper, erhältlich durch Schmelzformen und Kristallisieren einer Zusammensetzung nach einem der vorherigen Ansprüche.

## Revendications

1. Composition de polyester aliphatique comprenant (a) un polyester aliphatique ayant une masse moléculaire moyenne en masse de 5 000 à 35 000 ; (b) un polyester aliphatique ayant une masse moléculaire moyenne en masse de 120 000 à 1 000 000 ; et un ou plusieurs accélérateurs de cristallisation.

2. Composition selon la revendication 1, dans laquelle un rapport de combinaison du polyester (a) au polyester (b) est de 10:90 à 90:10 en masse.

3. Composition selon la revendication 1 ou 2, dans laquelle le polyester (a) comprend un acide poly-D-lactique et le polyester (b) comprend un acide poly-L-lactique.

4. Composition selon la revendication 1 ou 2, dans laquelle le polyester (a) comprend un acide poly-L-lactique et le polyester (b) comprend un acide poly-D-lactique.

5. Composition selon l'une quelconque des revendications précédentes, comprenant de plus un ou plusieurs élastomères.

6. Article moulé pouvant être obtenu par moulage à l'état de fusion et cristallisation d'une composition selon l'une quelconque des revendications précédentes.
